(19) Europäisches Patentamt
European Patent Office
Office européen des brevets

(11) Publication number: 0 115 200 B1

(12) # EUROPEAN PATENT SPECIFICATION

(45) Date of publication of patent specification: 22.02.89

(51) Int. Cl.$^4$: G 11 B 5/09

(21) Application number: 83307959.3

(22) Date of filing: 23.12.83

(54) **Methods and apparatus for recording an information signal on a magnetic medium.**

(30) Priority: 29.12.82 JP 233194/82

(43) Date of publication of application: 08.08.84 Bulletin 84/32

(45) Publication of the grant of the patent: 22.02.89 Bulletin 89/08

(84) Designated Contracting States: DE FR GB NL

(56) References cited:
DE-A-2 500 696
GB-A-2 062 313

Patent Abstracts of Japan vol. 6, no. 255, 14 December 1982 & JP-A-57-150109

(73) Proprietor: SONY CORPORATION
7-35 Kitashinagawa 6-Chome Shinagawa-ku
Tokyo 141 (JP)

(72) Inventor: Odaka, Kentaro c/o Patent Division
Sony Corporation 7-35 Kitashinagawa-6
Shinagawa-ku Tokyo (JP)

(74) Representative: Thomas, Christopher Hugo et al
D Young & Co 10 Staple Inn
London WC1V 7RD (GB)

EP 0 115 200 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to methods and apparatus for recording an information signal on a magnetic medium and, more particularly, but not exclusively, to methods and apparatus for recording an information signal on a magnetic tape using one or more rotary heads.

It has become standard practice in a video tape recorder (VTR) to record an information signal on a magnetic tape by means of a rotary head as a series of parallel tracks that are obliquely arranged in relation to the direction of travel of the tape. It is also known that in order to record properly the signal in these oblique tracks, the recording signal must have a predetermined phase relationship relative to the rotational phase of the rotary head. Otherwise, signals might be supplied to the recording head when it was not in contact with the tape and drop-outs would occur. Typically, a separate reference signal must be provided to indicate the rotational phase of the rotary head.

We have previously proposed (see our European patent specification EP—A2—0 092 403) that when a pulse code modulated (PCM) signal is to be recorded, the rotary head is controlled so that it comes into contact with the tape during the exact time that the PCM signal is read out of a memory. To accomplish this synchronized recording operation, the timing control of the rotary head is carried out by taking a signal representative of the rotational phase of the rotary head as a reference. One way of obtaining an appropriate reference signal indicating the rotational phase of the rotary head is to employ a pulse signal PG, which is obtained from a pulse generator formed by a combination of a magnet and a detecting coil, with both of these elements being located within the rotary head drum. This system adequately provides the necessary reference signal having head-position pulses therein, but the pulse generator apparatus must be disposed within the circumference of the rotary head drum. This becomes a problem when it is desired to reduce the diameter of the drum in order to reduce the size of the overall rotary head and tape guide drum assembly, for example, when embodying the apparatus as a portable video camera. Thus, the space required for the pulse generator becomes a pivoting factor because the diameter of the rotary head drum cannot be reduced, since space must be left to mount the magnet and detecting coil therewithin.

Not only does this pulse generator structure place a limitation on the minimum diameter of the tape guide drum but it adds to the construction costs and complexity of the entire rotary head drum assembly. Moreover, the accuracy with which the pulses must be generated requires critical adjustments between the head mounting position and the mounting position of the pulse generator and, thus, such adjustments become both troublesome and time consuming.

According to the present invention there is provided a method of recording a continuous analog signal on a magnetic medium using a recording head that periodically traces the magnetic medium with an arbitrary phase relative to the analog signal, the method comprising the steps of:

separating the continuous analog signal into predetermined real-time signal periods;

providing a respective digital signal corresponding to each said real-time signal period of the analog signal;

tracing said magnetic medium with the recording head to provide at least one recording period during each said real-time signal period, in which said at least one recording period is shorter than said real-time signal period;

adding additional data periodically to said digital signal to provide a composite digital signal divided in n addressable data blocks for each real time signal period;

time-base compressing said composite digital signal to a period less than said recording period, which is at least n+1 compressed data blocks long; and

repeatedly supplying said time-base compressed composite signal together with address data to the head more than once in each recording period for recording said composite signal on said magnetic medium in repetitive manner during a recording period.

According to the present invention there is also provided apparatus for recording a continuous analog signal on a magnetic medium using a recording head that periodically traces said magnetic medium with an arbitrary phase relative to the analog signal over a recording period, the apparatus comprising:

means for separating the continuous analog signal into predetermined real-time signal periods;

converting means for converting said analog signal, during successive said real-time signal periods thereof, into a corresponding digital signal in which said real-time signal period is longer than said recording period;

guide means for guiding said magnetic medium past the recording head;

digital data generating means for supplying and adding additional digital data to said digital signal to form a composite signal divided in n addressable data blocks for each real time signal period;

time-base compressing means for time-base compressing said composite digital signal into a period, less than said recording period which is at least n+1 compressed data blocks long; and

read-out means for repeatedly supplying said time-base compressed composite signal with address data to the head more than once during a recording period.

The invention will now be described by way of example with reference to the accompanying drawings, throughout which like parts are referred to by like references, and in which:

Figure 1 is a schematic representation of a

rotary head assembly used in a method and apparatus for recording an information signal and according to the present invention;

Figure 2 is a representation of the orientation of tracks recorded on a tape using the rotary head assembly of Figure 1;

Figure 3 is a block diagram illustrating a preferred embodiment of apparatus for recording an information signal and according to the present invention;

Figures 4A to 4R are timing charts illustrating the operation of the recording apparatus of Figure 3;

Figure 5 is a representation of a block of record data showing the format thereof;

Figure 6 is a block diagram representing another embodiment of apparatus for recording an information signal and according to the present invention; and

Figures 7A to 7H are timing charts for explaining the operation of the system of Figure 6.

Figure 1 schematically represents a rotary magnetic head assembly suitable for use in an embodiment of the present invention, which includes two magnetic heads 1A and 1B that are mounted on a rotating drum, not shown, so as to be diametrically opposed, with an angular separation of 180°. A suitable magnetic medium, such as a magnetic tape 2, is wrapped around the peripheral surface of a tape guide drum 3 with a circumferential angle of approximately 90°.

Typically, the heads 1A and 1B are rotated at thirty revolutions per second in the direction of an arrow 5H, thereby defining a "scanning period" of the rotating drum 3 of 1/30 of a second. The tape 2 is transported at a predetermined linear speed in the direction shown by an arrow 5T, so that in the recording operation the moving tape 2, and the heads 1A and 1B form a series of parallel, slanted or oblique tracks on the tape 2, as represented typically at 4A and 4B in Figure 2. The heads 1A and 1B cooperating with the tape 2 can record substantially any kind of electrical signal, and in this embodiment a pulse code modulated signal is to be recorded on the tape 2. The successive tracks 4A and 4B are arranged on the tape 2 adjacent to each other in a high-density fashion with no spaces or guard bands therebetween, and this can be accomplished by the known practice of providing the heads 1A and 1B with gaps that have different azimuth angles. This technique reduces cross-talk between adjacent tracks during reproduction by taking advantage of tme so-called azimuth loss phenomenon.

From Figure 1 it can be seen that during operation there will be a period of time when both the heads 1A and 1B are out of contact with the tape 2 and in this embodiment such period would correspond to an angular extent of 90°. In the present case these non-contact or free periods are used to add additional digital data, such as parity data and error correction codes, to the PCM data representing the information signal to be recorded.

In the embodiment of the present invention shown in Figure 3, an analog audio signal is recorded as two signals representing left and right stereo audio channels. A left-channel audio signal $S_L$ is supplied through an input terminal 11 to one input of a switching circuit 13, while a right-channel audio signal $S_R$ is supplied through an input terminal 12 to the other input terminal of the switching circuit 13. The switching circuit 13 is alternately changed over by a switching signal $SW_1$ produced by a control signal generating circuit 14, and the output from the switching circuit 13 is fed to an input of an analog-to-digital (A/D) converter 15. The A/D converter 15 samples the input analog signal under control of a sampling signal SP produced by the control signal generating circuit 14, which also generates other control signals described below that are derived from a master clock signal provided by a master clock circuit 10. The switching signal $SW_1$ that controls the operation of the switching circuit 13 has the same frequency as the sampling signal SP used to control the A/D converter 15, for example 44.1 kHz. As shown in Figure 4A, the switching signal $SW_1$ is a square-wave signal having 50% duty factor and when the switching signal $SW_1$ is high, the switching circuit 13 selects the left-channel audio signal $S_L$ and when the switching signal $SW_1$ is low, the switching circuit 13 is changed over to select the right-channel audio signal $S_R$. This permits the switching circuit 13, under control of the signal $SW_1$, to alternately select the inputs to form a single output signal, as represented in Figure 4B.

The sampling signal SP from the control signal generator circuit 14 controls the sampling frequency (44.1 kHz) of the A/D converter 15 so that the combined left-channel and right-channel audio signals from the switching circuit 13 are sampled respectively, and the data thus sampled is converted to a PCM signal $S_0$ of, for example, sixteen bits per word. Figure 4B shows the output signal $S_0$ from the A/D converter 15 in which $L_0$, $L_1$, $L_2$, ... represent single words of the left-channel audio PCM signal, while $R_0$, $R_1$, $R_2$, ... represent single words of the right-channel audio PCM signal. The output signal $S_0$ from the A/D converter 15 is fed through switching circuits 16, 17 and 18 to the respective inputs of a first random access memory (RAM) 19 (RAM 1), a second RAM 20 (RAM 2), a third RAM 21 (RAM 3), and a fourth RAM 22 (RAM 4). As will be explained below, these four RAMs operate to provide redundant data addition, interleave processing, and time-base compression of the digitized audio signals. The switching circuit 16, which receives the digitized audio signal $S_0$, is changed over in response to a switching signal $SW_2$, which is produced by the control signal generator 14 and in this embodiment has a frequency of approximately 30 Hz, the waveform of which is shown in Figure 4H. During the 1/60 of a second time period $T_A$ within which the switching signal $SW_2$ is high, every other signal $S_1$, $S_3$, $S_5$, ... is fed to the switching circuit 17, whereas

during the 1/60 of a second time period $T_B$ during which the switching signal $SW_2$ is low, the remaining signals $S_2$, $S_4$, $S_6$, ... are fed to the switching circuit 18.

The switching circuit 17 is changed over in response to a switching signal $RSW_A$, the waveform of which is shown in Figure 4I and which is provided by dividing the frequency of the switching signal $SW_2$ by one half, so that among the signals $S_1$, $S_3$, $S_5$, ... that are fed to the input of the switching circuit 17 every other signal will be written into the first RAM 19, for example, $S_1$, $S_5$, $S_9$, ... whereas the remaining signals $S_3$, $S_7$, $S_{11}$, ... will be written into the second RAM 20. The relationship between these signals is represented in Figures 4D and 4E.

On the other hand, the switching circuit 18 operates to distribute alternate signals between the third RAM 21 and the fourth RAM 22. Specifically, the switching circuit 18 is changed over in response to a switching signal $RSW_B$, the waveform of which is shown in Figure 4J, and which is obtained by delaying the switching signal $RSW_A$ by $\pi/2$, so that among the signals $S_2$, $S_4$, $S_6$, that are fed to the switching circuit 18, every other signal $S_2$, $S_6$, $S_{10}$, ... is written into the third RAM 21, whereas the remaining signals $S_4$, $S_8$, $S_{12}$, ... are written into the fourth RAM 22. The relationship between these signals is represented in Figures 4F and 4G. In this fashion, PCM audio data having a period of 1/60 of a second are alternately written into the four RAMs 19, 20, 21 and 22, and, in this embodiment, based upon the sampling frequencies described above, there are 1,470 samples contained within the 1/60 of a second period. More specifically, as shown in Figure 4B, there are 735 words, comprising words $L_0$ to $L_{734}$, for the left-channel audio signal and there are 735 words, comprising words $R_0$ to $R_{734}$, for the right-channel audio signal, thereby providing a total of 1,470 words.

During the first half portions of time periods $T_A$ and $T_B$, parity words and cyclic redundancy check (CRC) codes are added to the PCM data words that have been written into the four RAMs 19, 20, 21 and 22. Specifically, the output signals from the first and second RAMs 19 and 20 are respectively selectively supplied through a switching circuit 23 to a first parity word and CRC code generating and adding circuit 24. Similarly, the output signals from the third and fourth RAMs 21 and 22 are respectively, selectively supplied through a switching circuit 26 to a second parity word and CRC code generating and adding circuit 27. After the parity words and CRC codes have been added to the data input to the first adding circuit 24, the composite data is fed back through a switching circuit 25 to be distributed between the first and second RAMs 19 and 20, respectively. Similarly, after the parity words and CRC codes have been added to the data input to the second adding circuit 27, the composite data is fed back through the switching circuit 28 to be distributed between the third and fourth RAMs 21 and 22, respectively.

The switching circuits 23 and 25 that distribute the data back amoung the first and second RAMs 19 and 20, respectively, are changed over in synchronism with the switching circuit 17 under control of the switching signal $RSW_A$, whereas the switching circuits 26 and 28 that distribute the data words back among third and fourth RAMs 21 and 22, respectively, are changed over in synchronism with the switching circuit 18 under control of the switching signal $RSW_B$. The control signal generating circuit 14 generates a further control signal $CP_A$, which has a square waveform, and which has a high level during the first 1/120 of a second portion of the time period $T_A$, as represented in Figure 4L, and the control signal $CP_B$ is supplied to the second adding circuit 27. Accordingly, during the times when the control signals $CP_A$ and $CP_B$ are both at a high level, the parity words and the CRC codes are generated and added to the PCM data alternately fed out of the four RAMs 19, 20, 21 and 22.

The data that is written into the first RAM 19 during every other one of the time periods $T_A$ is supplied through the switching circuit 23 to the first adding circuit 24 in the preceding time period $T_B$. Similarly, in the first adding circuit 24, since the control signal $CP_A$ is high during the first half of the time period $T_B$, at that time the parity word and CRC code are generated for the input data, the parity word and CRC code are added to the input data, and the composite data is then rewritten back into the first RAM 19 at the original position thereof through action of the switching circuit 25. This same operation is performed in relation to the second RAM 20, specifically, the data stored in the second RAM 20 during the remaining every other one of the time periods $T_A$ is supplied through the switching circuit 23 to the first adding circuit 24. Then, during the first half of the subsequent time period $T_B$, when the control signal $CP_A$ is high, the parity word and CRC code are generated in the first adding circuit 24 and added to the data, and the composite data are rewritten back into the second RAM 20, at the same address locations.

In this same fashion, the data written into the third RAM 21 during every other one of the time periods $T_B$, and the data written into the fourth RAM 22, during the remaining every other ones of the time periods $T_B$ are respectively assembled with the parity word and CRC code during the first half of the subsequent time period $T_A$, just as described above in regard to the first and second RAMs 19 and 20. Thus, the RAMs 21 and 22 have written therein composite PCM data which have added thereto appropriate parity words and CRC codes.

When the parity word and the CRC code are generated and added to the PCM data, the PCM data is arranged into blocks of six words each and the parity data P and Q and the CRC code are added to such PCM data of six words as shown in Figure 5. As further shown in Figure 5, the data of six words in length is subjected to interleaving processing within the PCM data amount of 1/60 of

a second, which is accomplished by controlling the read addresses of the four RAMs 19, 20, 21 and 22 as one track, as will be described below.

The composite PCM data signals, which are the original PCM audio signals with the parity words and the CRC code added thereto, are read out from the four RAMs 19, 20, 21 and 22 in such a fashion that the respective time bases are compressed substantially to an amount corresponding to the duration of contact of the rotary heads 1A and 1B with the tape 2, specifically, time-base compression is approximately one-half of the original time-base. Thus, the time-base compressed signals having the parity words and CRC code words added thereto are repeatedly read out from the four RAMs 19, 20, 21 and 22 during a period of one revolution of the head 1A and 1B and are fed through recording processors 31 and 32 to the heads 1A and 1B, respectively. In other words the output signals from the first and second RAMs 19 and 20 are selectively switched by a switching circuit 29 under control of a switching signal $SW_3$ and supplied through the recording processor 31 to the head 1A. Similarly, output signals from the third and fourth RAMs 21 and 22 are selectively switched by a switching circuit 30 under control of a switching signal $SW_4$ and fed through the recording processor 32 to the head 1B.

The waveform of the switching signal $SW_3$, as shown in Figure 4M, inverts its state each time the parity word and CRC code processing has ended in the RAMs 19 and 20 and is produced by the control signal generator 14 and fed to the switching circuit 29, so that the switching circuit 29 is changed over to the first RAM 19 side while the switching signal $SW_3$ is high during a time period $T_{19}$, and the switching circuit 29 is changed over to select the output signals from the second RAM 20 when the switching signal $SW_3$ is low during a time period $T_{20}$. The first and second RAMs 19 and 20 are respectively set in the read out mode during the time periods $T_{19}$ and $T_{20}$, so that they are read out at a speed slightly higher than twice the write-in speed, That is, in this embodiment, the PCM data corresponding to the original period of 1/60 of a second duration, which is assembled with the error correction data such as the parity words and CRC code, is compressed in time-base to a duration somewhat shorter than the head-tape contact period of 1/120 of a second. Thus, data $S_1'$, $S_3'$, ... each having a compressed time-base, designated by the prime notation so as to be distinguished from the original PCM data $S_1$, $S_3$, ... of 1/60 of a second time-base that was represented in Figures 4D and 4E, are repeatedly read out four times or more from the RAMs 19 and 20 during the read time periods $T_{19}$ and $T_{20}$, and such read out data are then supplied through the recording processor 31 to the head 1A.

This same processing is performed in relation to the third and fourth RAMs 21 and 22, in which the switching signal $SW_4$, shown in Figure 4N, inverts its state when the parity word and CRC code generating and adding processing is ended and is fed from the control signal generator 14 to the switching circuit 30 so that when the switching signal $SW_4$ is high during a time period $T_{21}$, the switching circuit 30 is changed over to connect the output of the third RAM 21 and during a time period $T_{22}$ when the switching signal $SW_4$ is low, the switching circuit 30 is changed over to connect the output of the fourth RAM 22. Thus, the RAMs 21 and 22 are respectively set in the read mode during the time periods $T_{21}$ and $T_{22}$ during which, in the manner discussed above relative to the first and second RAMs 19 and 20, the PCM data are repeatedly read out at a speed slightly higher than twice the speed at which they are written in, as shown in Figures 4F and 4G, and this read-out data is supplied through the recording processor 32 to the head 1B.

Because the heads 1A and 1B are rotated at a constant speed of thirty revolutions per second regardless of the timing signals in the recording system described above, the heads 1A and 1B have an arbitrary system described above, the heads 1A and 1B have an arbitrary phase relationship relative to the data that is read out from the RAMs 19, 20, 21 and 22. Nevertheless, the time-base compressed data $S_1'$, $S_2'$, $S_3'$, ... that make up one segment are respectively supplied to the head 1A or 1B repeatedly over one rotational period so that during the tape contact interval of the heads 1A and 1B the signals supplied thereto are recorded on the tape 2 as tracks 4A and 4B, respectively. More specifically, if the tape contact interval between the tape 2 and the head 1A corresponds to the time period represented by the cross-hatched waveform portion in Figure 4O, and the contact interval between the tape 2 and the head 1B corresponds to the time period represented by the cross-hatched waveform portion in Figure 4Q, it may be seen from Figures 4P and 4R that one segment of PCM data is read out from the four RAMs 19, 20, 21 and 22 in different sequential order but will always be recorded in one track. In this case, since the speed of reading is slightly greater than twice the speed of writing, the data of one segment amount is partially repeated and recorded on one track. As described above, the two-channel amount of data of 1/60 of a second each is recorded after being compressed in time-base by approximately one half.

As represented in Figure 5, in the recording processors 31 and 32, one block of data has added thereto a block synchronizing signal SYNC and address data ADS, which consists of a segment address indicating the kind of segment and the block address for its block. Since one block is formed of six words, the number of blocks contained in the data of one segment is calculated as:

$$1{,}470\ (\text{words}) \div 6 = 245\ (\text{blocks})$$

Thus, as represented in Figure 5, the data is formed of 245 blocks from the first block $B_0$ to the last block $B_{244}$.

The recording processors 31 and 32 operate to modulate the PCM data to a signal suitable for

recording, for example, by reducing any DC component in the data signals as much as possible before recording.

Turning now to Figure 6, a system suitable for reproducing the signals recorded as described above is shown. It is to be understood that the heads 1A and 1B are controlled by a tracking servo so that they correctly trace the recorded tracks 4A and 4B and since various tracking-servo methods are known it is not necessary to show such systems. Accordingly, upon playback an output signal, as represented in Figure 7A, is provided by aligning the head 1A to track the track 4A and a similar output signal, as represented in Figure 7B, is provided by causing the head 1B to trace the track 4B. These two output signals from the heads 1A and 1B, respectively, are fed through amplifiers 33A and 33B to digital signal restoring circuits 34A and 34B, respectively, wherein they are reconverted to digital signals having levels of 0 or 1 and then fed to error detection and RAM write control signal generating circuits 35A and 35B, respectively. The control circuits 35A and 35B serve to provide error detection by utilizing parity words P and Q and the CRC codes and the synchronizing signal SYNC and address data ADS at each block are employed to generate a write address and write timing signal for two RAMs 36A and 36B. Specifically, once the write address and write timing signals are obtained from the control circuits 35A and 35B, the block data is written into the RAMs 36A and 36B at the specified addresses through the action of switching circuits 37A and 37B, respectively. The result of this switching operation based upon the appropriate addresses and the SYNC signals is to cause the one segment of data recorded on one track in an irregular order to be written into the RAMs 36A and 36B at the specified addresses, as represented in Figures 7C and 7D.

Once all of the data in one segment have been written into the RAMs 36A and 36B, each then provides an end signal, and each end signal is provided by adding the write timing signals generated at every block of data. The end signals are respectively supplied to a control signal generating circuit 38, which is also supplied with a clock signal from a master clock signal generator 39, so that control signals for this reproducing system shown in Figure 6 can be derived therefrom on the basis of the above-described end signals. More specifically, when the end signals are supplied from the RAMs 36A and 36B, a first control signal $WC_A$, shown in Figure 7E, and a second control signal $WC_B$, shown in Figure 7F, are produced by the control signal generator 38 and have waveforms such that the signals remain low for a 1/120 of a second duration from that point. During the low level period of 1/120 of a second of the control signals $WC_A$ and $WC_B$, the switching circuits 37A and 37B are controlled by the control signals $WC_A$ and $WC_B$, respectively, that are changed to opposite states from those shown in the appropriate figure. During this period, the data written into the RAMs 36A and 36B are fed respectively to corresponding error correction circuits 40A and 40B, in which the data having had errors detected therein are corrected by use of the parity words P and Q and the CRC code. Once such data has been error corrected it is then rewritten back into the RAMs 36A and 36B.

Data that has been error corrected as described above and rewritten into the RAMs 36A and 36B are then read out with the time-bases thereof expanded by a factor of two, in response to a read control signal generated by the control signal generator 38. More specifically, a switching circuit 41 has an input connected to the output of both the RAMs 36A and 36B, respectively, and is changed over to be connected to the RAM 36A in response to a control signal $RSW_P$ from the control signal generator 38, having a high level during a time period $T_C$. Similarly, the switching circuit 41 is changed over to be connected with the RAM 36B when the control signal $RSW_P$ has a low level during a time period $T_D$. The result of this is that either of the RAMs 36A and 36B, which up to that time has not been in the write mode, is always set in the read mode so that during the time period $T_C$ the data is read out from the RAM 36A or during the time period $T_D$ the data is read out from the RAM 36B.

At that time the data words that were distributed in the one segment by the interleaving processing that occurred during recording are now deinterleaved because the write address to the RAMs 36A and 36B are controlled upon reproduction so that the data read out therefrom can be returned to the data words formed in the original order. This example of control of the write addresses is only one of the ways in which deinterleaving may be accomplished.

The data thus read out are selectively extracted by the switching circuit 41, as shown in Figure 7H. This read out data is then fed to an error concealing circuit 42, which acts to conceal those errors that could not be fully corrected in the error correction circuits 40A and 40B. Error concealing circuits are well known and may consist of pre-value holding systems so that any errors are statistically concealed.

The output signal of the error concealing circuit 42 consists of left-channel and right-channel audio data that alternately appear at each word. This output signal is reconverted to the original analog signal in a digital-to-analog (D/A) converter 43, and the reconverted analog signal is fed to a switching circuit 44, which is alternately changed over to one or the other of two output terminals in response to a switching signal $SW_P$, and in this embodiment the switching signal $SW_P$ has a frequency of 44.1 kHz, which is identical to the frequency of the switching signal $SW_1$ that was used in recording. In this fashion, the left-channel and right-channel audio signals are fed through amplifiers 45L and 45R to output terminals 46L and 46R that comprise the reproduced outputs, respectively.

The operational states of the RAMs 36A and

36B during reproducing are shown by the timing signals in Figures 7C and 7D, respectively.

The PCM signal whose time-base has been compressed to a duration corresponding to the tape contact interval between the rotary head and the tape can be recorded in accordance with the above so that it can be reproduced even if the rotational phase of the rotary head is not synchronized with the recording signal.

Nevertheless, since as described above, the rotational phase of the rotary head can be entirely arbitrary relative to the recording signal, it would appear that the rotary head 1A, for example, would contact the tape 2 during a time covering the time periods $T_{19}$ and $T_{20}$ as seen in Figure 4. If so, signals of different unit period amount, for example, $S_1$ and $S_2$, are recorded on one record track so that it would seem that a problem would arise in the interleave processing of one segment unit, in the parity data generation and the like. However, even in such a case, if upon recording the address data of each unit period amount, that is, the address of each segment, is added to the data in addition to the address of each block as described above, then during reproduction such data can be satisfactorily reproduced by providing two individual RAMs for each recording or reproduction head. In such a case, a signal indicating the end of each segment is inserted at the beginning or end of one segment of data.

Furthermore, even when the rotational phase of the rotary head is not accurately known, unlike the phase detection signal for a rotary head as described above, if when the tape is stopped the signal is recorded by the head at a certain rotational period, and such recorded signal is then reproduced during the succeeding rotational period and the reproduced signal envelope-detected, the time at which the head starts to contact the tape can be roughly detected by the output, and the detected signal supplied to the control signal generator by which the phase of the control signal can be controlled in advance. Thus, the recording timing of the recording signal can be determined relative to the rotational phase of the rotary head in such a way that the PCM data of one segment can be recorded in one track. Also, since the rotational phase of the rotary head is known to a certain extent by the phase of the drive signal that is supplied to the motor for driving the rotary head, the above recording timing can be controlled by the detected phase of the drive signal.

A further advantage is provided by the above embodiment, since the PCM data of one segment is time-base compressed to a duration just slightly short of any tape contact interval with the head and is then recorded, the data of one segment is recorded on the corresponding one track as partially repeated, thus preventing drop-outs.

Modificatios are of course possible. For example, when recording can be performed with a guard-band between the tracks 4A and 4B, it is not necessary to have different azimuth gap angles of the heads 1A and 1B. Moreover, the number of rotary heads need not be limited to two but can be as few as one or can exceed two. Furthermore, the present invention is not limited to an information signal that comprises a left and right audio PCM signal but can be of any information signal, such as a video signal.

As can be seen from the above, the present invention provides a method and apparatus where a PCM signal having a compressed time-base can be recorded with no adverse effects by a rotary head having any desired rotational phase relative to the recording signal upon reproduction. Accordingly, the pulse generator that was indispensable in the prior art systems in order to generate the signal indicating the rotational phase of the rotary head is not required. Thus, the requirement to provide the pulse generator within the drum of the rotary head assembly is no longer present, and the diameter of the tape guide drum can be made smaller. Moreover, the construction of the drum can be simplified and the rotary head can be manufactured at a correspondingly lower cost. Also, by eliminating the requirement for the pulse generator, the troublesome and burdensome task of adjusting the head mounting position and the position of the pulse generator is eliminated.

## Claims

1. A method of recording a continuous analog signal on a magnetic medium (2) using a recording head (1A, 1B) that periodically traces the magnetic medium (2) with an arbitrary phase relative to the analog signal, the method comprising the steps of:

separating the continuous analog signal into predetermined real-time signal periods;

providing a respective digital signal corresponding to each said real-time signal period of the analog signal;

tracing said magnetic medium (2) with the recording head (1A, 1B) to provide at least one recording period during each said real-time signal period, in which said at least one recording period is shorter than said real-time signal period;

adding additional data periodically to said digital signal to provide a composite digital signal divided in n addressable data blocks for each real-time signal period;

time-base comprsssing said composite digital signal to a period less than said recording period, which is at least n+1 compressed data blocks long; and

repeatedly supplying said time-base compressed composite signal together with address data to the head (1A, 1B) more than once in each recording period for recording said composite signal on said magnetic medium (2) in repetitive manner during a recording period.

2. A method according to claim 1 wherein two equally-spaced recording heads (1A, 1B) are provided, and including the further step of guiding said magnetic medium (2) into contact with said

recording heads (1A, 1B) over an angular extent of 90°.

3. A method according to claim 1 wherein the analog signal is provided in two separate channels simultaneously and two recording heads (1A, 1B) are used; and wherein said digital signal comprises a single pulse code modulated (PCM) signal representing both of the channels of the analog signal.

4. A method according to claim 3 wherein said step of adding additional data periodically includes the step of adding parity data and a cyclic redundancy check code.

5. A method according to claim 4 wherein the step of time-base compressing said composite digital signal includes the steps of writing said PCM signal into different memory means (19, 20, 21, 22) during alternating real-time signal period of the analog signal and reading out data written into said memory means at a rate higher than that in which they were written in.

6. A method according to claim 4 including the step of recording said composite digital signal on said magnetic medium (2) with data corresponding to said separate channels being recorded in alternate tracks (4A, 4B) respectively.

7. A method according to claim 4 including the further steps of forming said time-base compressed composite digital signal into blocks, providing said address data to correspond to said blocks, and adding said address data to said composite signal prior to recording.

8. A method according to claim 4 wherein the step of supplying repeatedly said time-base compressed composite signal includes supplying said time-base compressed composite signal at least twice during each recording period.

9. Apparatus for recording a continuous analog signal on a magnetic medium (2) using a recording head (1A, 1B) that periodically traces said magnetic medium (2) with an arbitrary phase relative to the analog signal over a recording period, the apparatus comprising:

means for separating the continuous analog signal into predetermined real-time signal periods;

converting means (15) for converting said analog signal, during successive said real-time signal periods thereo, into a corresponding digital signal in which said real-time signal period is longer than said recording period;

guide means 3) for guiding said magnetic medium (2) past the recording head (1A, 1B);

digital data generating means (24, 27) for supplying and adding additional digital data to said digital signal to form a composite signal divided in n addressable data blocks for each real time signal period;

time-base compressing means (19, 20, 21, 22) for time-base compressing said composite digital signal into a period, less than said recording period, which is at least n+1 compressed data blocks long; and

read-out means (29, 30) for repeatedly supplying said time-base compressed composite signal with address data to the head (1A, 1B) more than once during a recording period.

10. Apparatus according to claim 9 wherein said time-base compressing means (19, 20, 21, 22) includes memory means (19, 20, 21, 22) for storing said composite digital signal and time-base compressing said digital signal by reading out said digital signal at a rate greater than a rate at which it was written in, and said read-out means (29, 30) is connected to said memory means (19, 20, 21, 22) for repeatedly and periodically reading out said digital signal stored in said memory means (19, 20, 21, 22) more than once during each recording period, such that said composite digital signal repeats in a recording period.

11. Apparatus according to claim 10 wherein said recording head (1A, 1B) includes at least two magnetic heads (1A, 1B) being equally spaced and arranged for rotation thereby to define a recording period corresponding to the period of rotation of said magnetic heads (1A, 1B) and to provide a series of tracks on said magnetic medium (2) which is in the form of a magnetic tape (2); and

said guide means (3) includes means (3) for guiding said magnetic tape (2) past said magnetic heads (1A, 1B) through an angular range substantially equal to 90°.

12. Apparatus according to claim 11 wherein said two magnetic heads (1A, 1B) are connected for recording an analog signal provided in two separate channels; said converting means (15) includes means (15) for providing a pulse code modulated (PCM) signal representing both the channels of the analog signal; and said data generating means (24, 27) includes means (24, 27) for generating parity data and cyclic redundancy check codes for addition to said PCM signal.

13. Apparatus according to claim 12 wherein said time-base compressing means (19, 20, 21, 22) includes memory means (19, 20, 21, 22) for storing and time-base compressing said composite digital signal to a period having a duration of one-half said recording period.

14. Apparatus according to claim 13 wherein said memory means (19, 20, 21, 22) includes first and second pairs of random access memories (19, 20, 21, 22) for receiving the PCM signals corresponding to alternating real-time signal periods in each of said two channels.

15. Apparatus according to claim 14 further comprising processing means (31, 32) for receiving said time-base compressed composite digital signal and adding thereto supplementary digital data including said address data at the beginning and ends thereof prior to recording on said magnetic tape (2).

16. Apparatus according to claim 15 wherein said processing means (31, 32) includes means (32, 32) for adding synchronization data and said address data as said supplementary digital data.

**Patentansprüche**

1. Verfahren zum Aufzeichen eines kontinuierlichen Analogsignals auf einem magnetischen Medium (2) unter Verwendung einer Aufnahmekopfanordnung (1A, 1B), die das magnetische Medium (2) mit relativ zu dem Analogsignal beliebiger Phase periodisch abtastet, wobei das Verfahren folgende Verfahrensschritte umfaßt:

Trennen des kontinuierlichen Analogisignal in vorbestimmte Echtzeit-Signalperioden,

Bilden eines den einzelnen Echtzeit-Signalperioden des Analogsignals entsprechenden Digitalsignals,

Abtasten des magnetischen Mediums (2) mit der Aufnahmekopfanordnung (1A, 1B) derart, daß während jeder Echtzeit-Signalperiode wenigstens eine Aufzeichnungsperiode erzeugt wird, wobei wenigstens eine Aufzeichnungsperiod kürzer ist als die Echtzeit-Signalperiode,

periodisches Hinzufügen zusätzlicher Daten zu dem Digitalsignal, um ein Digitalsignalgemisch zu erzeugen, das in eine Anzahl n addressierbare Datenblöcke für jede Echtzeit-Signalperiode unterteilt ist,

Komprimieren der Zeitbasis des Digitalsignalgemischs auf eine Periode, die kürzer ist als die Aufzeichungsperiode und wenigstens n+1 Datenblöcke umfaßt,

wiederholtes Zuführen des in seiner Zeitbasis komprimierten Digitalsignalgemischs zusammen mit Adressendaten zu der Aufnahmekopfanordnung (1A, 1B) mehr als einmal pro Aufzeichnungsperiod, um das Digitalsignalgemisch während einer Aufzeichungsperiod wiederholt auf dem magnetischen Medium (2) aufzuzeichnen.

2. Verfahren nach Anspruch 1, bei dem zwei in gleichen Abständen angeordnete Aufnahmeköpfe (1A, 1B) vorgesehen sind, mit dem weiteren Verfahrensschritt, daß das magnetische Medium (2) so geführt wird, daß es über einen Winkel von 90° mit den Aufnahmeköpfen (1A, 1B) in Kontakt steht.

3. Verfahren nach Anspruch 1, bei dem das Analogsignal gleichzeitig in zwei getrennten Kanälen zugeführt wird und zwei Aufnahmeköpfe (1A, 1B) verwendet werden, und bei dem das kigitalsignal ein einziges pulscodemoduliertes Signal (PCM-Signal) umfaßt, das beide Kanäle des Analogsignals repräsentiert.

4. Verfahren nach Anspruch 3, bei dem in dem Verfahrensschritt des Hinzufügens zusätzlicher Daten periodisch Paritätsdaten und ein zyklischer Redundanzprüfkode zugefügt werden.

5. Verfahren nach Anspruch 4, bei dem in dem Verfahrensschritt des Komprimierens des Zeitbasis des Digitalsignalgemischs

das genannte PCM-Signal während abwechselnder Echtzeit-Signalperioden des Analogsignals in unterschiedliche Speichermittel (19, 20, 21, 22) eingeschrieben wird, und

die in die Speichermittel eingeschriebenen Daten mit einer Rate ausgelesen werden, die größer ist als die Rate, mit der sie eingeschrieben wurden.

6. Verfahren nach Anspruch 4 mit dem Verfahrensschricht, daß das Digitalsignalgemisch auf dem magnetischen Medium (2) mit Daten aufgezeichnet wird, die den genannten getrennten Kanälen entsprechen, welche jeweils in abwechselnden Spuren (4A, 4B) aufgezeichnet werden.

7. Verfahren nacanspruch 4 mit den weiteren Verfahrensschritten,

daß aus dem in seiner Zeitbasis komprimierten Digitalsignalgemisch Blöcke gebildet werden,

daß diesen Blöcken entsprechende Adressendaten erzeugt werden, und

daß diese Adressendaten dem Digitalsignalgemisch vor dem Aufzeichnen hinzugefügt werden.

8. Verfahren nach Anspruch 4, bei dem der Verfahrensschritt des wiederholten Zuführens des in seiner Zeitbasis komprimierten Digitalsignalgemischs ein wenigstens zweimaliges Zuführen des in seiner Zeitbasis komprimierten Digitalsignalgemischs während jeder Aufzeichnungsperiod beinhaltet.

9. Gerät zum Aufzeichnen eines kontinuierlichen Analogsignals auf einem magnetischen Medium (2) unter Verwendung einer Aufnahmekopfanordnung (1A, 1B), die das magnetische Medium (2) über eine Aufzeichungsperiod mit relativ zu dem Analogsignal beliebiger Phase periodisch abtastet, wobei das Gerät folgende Teile umfaßt:

Mittel zum Trennen des kontinuierlichen Analogsignal in vorbestimmte Echtzeit-Signalperioden,

Wandlermittel (15), die dazu dienen, das Analogsignal wärhend aufeinanderfolgender Echtzeit-Signalperioden desselben in ein korresponderendes Digitalsignal umzuwandlen, wobei die Echtzeit-Signalperiode länger ist als die Aufzeichnungsperiode,

Führungsmittel (3), die das magnetische Mediums (2) an der Aufnahmekopfanordnung (1A, 1B) vorbeiführen,

Mittel (24, 27) die zusätzliche digitalem Daten erzeugen und zu dem genannten Digitalsignal hinzufügen, um ein Digitalsignalgemisch zu erzeugen, das in eine Anzahl n addressierbare Datenblöcke pro Echtzeit-Signalperiode unterteil ist,

Mittel (19, 20, 21, 22) zum Komprimieren der Zeitbasis des Digitalsignalgemischs auf eine eine Periode, die kürzer ist als die Aufzeichnungsperiod und wenigstens n+1 Datenblöcke umfaßt,

sowie Auslesemittel (29, 30), die das in seiner Zeitbasis komprimierte Digitalsignalgemisch zusammen mit Adressendaten wiederholt der Aufnahmekopfanordnung (1A, 1B) mehr als einmal pro Aufzeichfungsperiod zuführen.

10. Gerät nach Anspruch 9, bei dem dit Mittel (19, 20, 21, 22) Speichermittel (19, 20, 21, 22) zum Speichern des Digitalsignalgemsichs enthalten und das Komprimieren der Zeitbasis des Digitalsignals dadurch erfolgt, daß das Digitalsignal mit einer Rate ausgelesen wird, die größer ist als die Rate, mit der es eingeschrieben wurde, wobei die Auslesemittel (29, 20) derart mit den Speichermitteln (19, 20, 21, 22) verbunden sind, daß sie das in

dienen gespeicherte Digitalsignal wiederholt und periodisch mehr als einmal während jeder Aufzeichnungsperiode auslesen, so daß das Digitalsignalgemisch sich sich in einer Aufzeichnungsperiode wiederholt.

11. Gerät nach Anspruch 10,
bei dem der Aufnahmekopf (1A, 1B) wenigstens zwei in gleichem Abstand angeordnete Magnetköpfe (1A, 1B) umfaßt, die drehbar angeordnet sind, wodurch eine mit de Umdrehungsperiode der Magnetköpfe (1A,1B) korrespondierende Aufzeichnungsperiod definiert wird und auf dem als Magnetband (2) ausgebildeten magnetischen Medium (2) eine Reihe von Spuren erzeugt werden, und
bei dem die Führungsmittel (3) Mittel (3) umfassen, die das Magnetband (2) über einen Winkelbereich von etwa 90° and den Magnetköpfen (1A, 1B) vorbeiführen.

12. Gerät nach Anspruch 11, bei dem die beiden Magnetköpfe (1A, 1B) so angeordnet sind, daß sie ein in zwei separaten Kanälen geliefertes Analogsignal aufzeichnen, wobei die Wandlermittel (15) Mittel (15) enthalten, die ein die beiden Kanäle des Analogsignals repräsentierendes pulscodemoduliertes Signal (PCM-Signal) liefern, und die Datenerzeugungsmittel (24, 27) Mittel (24, 27) zur Erzeugung von dem PCM-Signal hinzuzufügenden Paritätsdaten und zyklischer Redundanzprüfkodes umfassen.

13. Gerät nach Anspruch 12, bei dem die Mittel (19, 20, 21, 22) zum Komprimierten der Zeitbasis Speichermittel (19, 20, 21, 22) umfassen, die das Digitalsignalgemisch speichern und in seiner Zeitbasis auf eine Periode komprimieren, deren Dauer halb so groß ist wie die Aufzeichnungsperiode.

14. Gerät nach Anspruch 13, bei dem die Speichermittel (19, 20, 21, 22) ein erstes und ein zweites Paar von Schreib-Lesespeichern (19, 20, 21, 22) zur Aufnahme der PCM-Signale umfassen, die wechselnden Echtzeit-Signalperioden in jedem der beidem Kanäle entsprechenden.

15. Gerät nach Anspruch 14, bei dem ferner eine Prozessoreinrichtung (31, 32) vorgesehen ist, die das in seiner Zeitbasis komprimierte Digitalsignalgemisch aufnimmt und diesem vor seinem Aufzeichnen auf dem Magnetband (2) am Anfang und am Ende zusätzliche digitale Daten einschließlich der Adressendaten hinzufügt.

16. Gerät nach Anspruch 15, bei dem die Prozessoreinrichtung Mittel (31, 32) umfaßt, die als die genannten zusätzlichen Daten Synchronisierdaten sowie die genannten Adressendaten hinzufügen.

**Revendications**

1. Procédé d'enregistrement d'un signal analogique continu sur un support magnétique (2) mettant en oeuvre une tête d'enregistrement (1A, 1B) qui suit périodiquement le support magnétique (2) avec une phase arbitraire par rapport au signal analogique, le procédé consistant à:
—séparer le signal analogique continu en périodes de signal en temps réel prédéterminées;
—fournir un signal numérique respectif correspondant à chaque période de signal en temps réel du signal analogique;
—suivre le support magnétique (2) avec la tête d'enregistrement (1A, 1B) pour fournir au moins une période d'enregistrement pendant chaque période de signal en temps réel, où la période d'enregistrement au moins est plus courte que la période de signal en temps réel;
—ajouter périodiquement des données supplémentaires au signal numérique pour fournir un signal numérique composite divisé en n blocs de données adressables pour chaque période de signal en temps réel;
—condenser en base de temps le signal numérique composite en une période inférieure à la période d'enregistrement, qui est longue d'au moins (n+1) blocs de données condensés; et à
—fournir de façon répétitive le signal composite condensé en base de temps ainsi que des données d'adresse à la tête (1A, 1B) plus d'une fois dans chaque période d'enregistrement pour enregistrer le signal composite sur le support magnétique (2) d'une manière repétitive pendant une période d'enregistrement.

2. Procédé selon la revendication 1, dans lequel sont prévues deux têtes d'enregistrement également espacées (1A, 1B), et consistant en outre à guider le support magnétique (2) pour le mettre en contact avec les têtes d'enregistrement (1A, 1B) sur une étendue angulaire de 90°.

3. Procédé selon la revendication 1, dans lequel le signal analogique est fourni dans deux voies séparées simultanément et deux têtes d'enregistrement (1A, 1B) sont utilisées; et dans lequel le signal numérique comprend un seul signal modulé par impulsions codées (PCM) représentant les deux voies du signal analogique.

4. Procédé selon la revendication 3, dans lequel l'opération d'addition périodique de données supplémentaire consiste à ajouter des données de parité et un code de contrôle de redondance cyclique.

5. Procédé selon la revendication 4, dans lequel l'opération de condensation de base de temps du signal numérique composite consiste à écrire le signal PCM dans des mémoires différentes (19, 20, 21, 22) pendant des périodes de signal en temps réel alternées du signal analogique et à lire les données écrites dans les mémoires à un débit supérieur à celui où elles y ont été écrites.

6. Procédé selon la revendication 4, consistant à enregistrer le signal numérique composite sur le support magnétique (2), les données correspondant aux voies séparées étant enregistrées respectivement dans des pistes alternées (4A, 4B).

7. Procédé selon la revendication 4, consistant en outre à former le signal numérique composite condensé en base de temps en blocs, à fournir les données d'adresse pour les faire correspondre aux blocs, et à ajouter les données d'adresse au signal composite avant un enregistrement.

8. Procédé selon la revendication 4, dans lequel l'opération de fourniture de façon répétitive du signal composite condensé en base de temps consiste à fournir le signal composite condensé en

base de temps au moins deux fois pendant chaque période d'enregistrement.

9. Dispositif pour enregistrer un signal analogique continu sur un support magnétique (2) en mettant en oeuvre une tête d'enregistrement (1A, 1B) qui suit périodiquement le support magnétique (2) avec une phase arbitraire par rapport au signal analogique sur une période d'enregistrement, le dispositif comprenant:

—un moyen pour séparer le signal analogique continu en périodes de signal en temps réel prédéterminées;

—un convertisseur (15) pour convertir le signal analogique, pendant des périodes de signal en temps réel successives de celui-ci, en un signal numérique correspondant où la période de signal en temps réel est plus longue que la période d'enregistrement;

—un moyen de guidage (3) pour guider le support magnétique (2) passant devant la tête d'enregistrement (1A, 1B);

—un moyen générateur de données numériques (24, 27) pour fournir et ajouter des données numériques supplémentaires au signal numérique afin de former un signal composite divisé en n blocs de données adressables pour chaque période de signal en temps réel;

—un moyen de condensation de base de temps (19, 20, 21, 22) pour condenser en base de temps le signal numérique composite en une période, inférieure à la période d'enregistrement, qui est longue au moins de (n+1) blocs de données condensés; et

—un moyen de lecture (29, 30) pour fournir de façon répétitive le signal composite condensé en base de temps avec des données d'adresse à la tête (1A, 1B) plus d'une fois pendant une période d'enregistrement.

10. Dispositif selon la revendication 9, dans lequel le moyen de condensation de base de temps (19, 20, 21, 22) comprend des mémoires (19, 20, 21, 22) pour mémoriser le signal numérique composite et pour condenser en base de temps le signal numérique en lisant le signal numérique à un débit supérieur à un débit auquel il y a été écrit, et le moyen de lecture (29, 30) est connecté aux mémoires (19, 20, 21, 22) pour lire de façon répétitive et périodiquement le signal numérique mémorisé dans les mémoires (19, 20, 21, 22) plus d'une fois pendant chaque période d'enregistrement, de sorte que le signal numérique composite se répète dans une période d'enregistrement.

11. Dispositif selon la revendication 10, dans lequel la tête d'enregistrement (1A, 1B) comprend au moins deux têtes magnétiques (1A, 1B) également espacées et agencées pour une rotation pour définir ainsi une période d'enregistrement correspondant à la période de rotation des têtes magnétiques (1A, 1B) et pour fournir une série de pistes sur le support magnétique (2) ayant la forme d'une bande magnétique (2); et

—le moyen de guidage (3) comprend un moyen (3) pour guider la bande magnétique (2) passant devant les têtes magnétiques (1A, 1B) dans un intervalle angulaire essentiellement égal à 90°.

12. Dispositif selon la revendication 11, dans lequel les deux têtes magnétiques (1A, 1B) sont connectées pour enregistrer un signal analogique fourni dans deux voies séparées; le moyen convertisseur (15) comprend un moyen (15) pour fournir un signal modulé par impulsions codées (PCM) représentant les deux voies du signal analogique; et le moyen générateur de données (24, 27) comprend un moyen (24, 27) pour générer des données de parité et des codes de contrôle de redondance cyclique à ajouter au signal PCM.

13. Dispositif selon la revendication T2, dans lequel le moyen de condensation de base de temps (19, 20, 21, 22) comprend des mémoires (19, 20, 21, 22) pour mémoriser et condenser en base de temps le signal numérique composite en une période ayant une durée de la moitié de la période d'enregistrement.

14. Dispositif selon la revendication 13, dans lequel les mémoires (19, 20, 21, 22) comprennent des première et deuxième paires de mémoires à accès sélectif (19, 20, 21, 22) pour recevoir les signaux PCM correspondant aux périodes de signal en temps réel alternées dans chacune des deux voies.

15. Dispositif selon la revendication 14, comprenant en outre un moyen de traitement (31, 32) pour recevoir le signal numérique composite condensé en base de temps et lui ajouter des données numériques supplémentaires incluant les données d'adresse au début et à la fin de celui-ci avant de l'enregistrer sur la bande magnétique (2).

16. Dispositif selon la revendication 15, dans lequel le moyen de traitement (31, 32) comprend un moyen (32, 32) pour ajouter des données de synchronisation et les données d'adresse comme données numériques supplémntaires.

FIG. 1

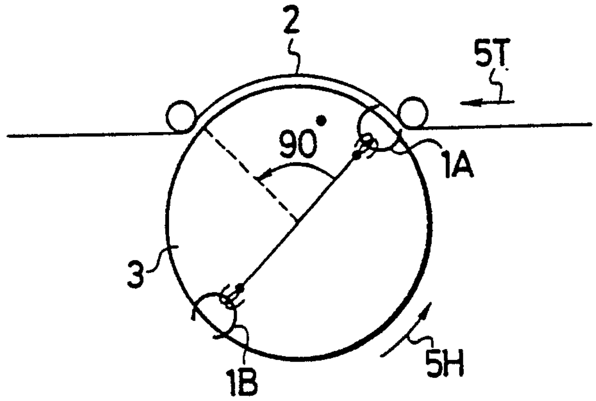


FIG. 2

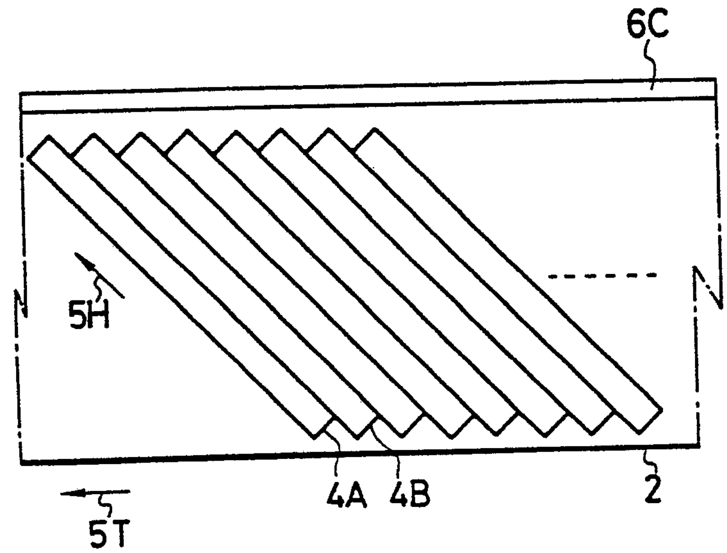

FIG. 3

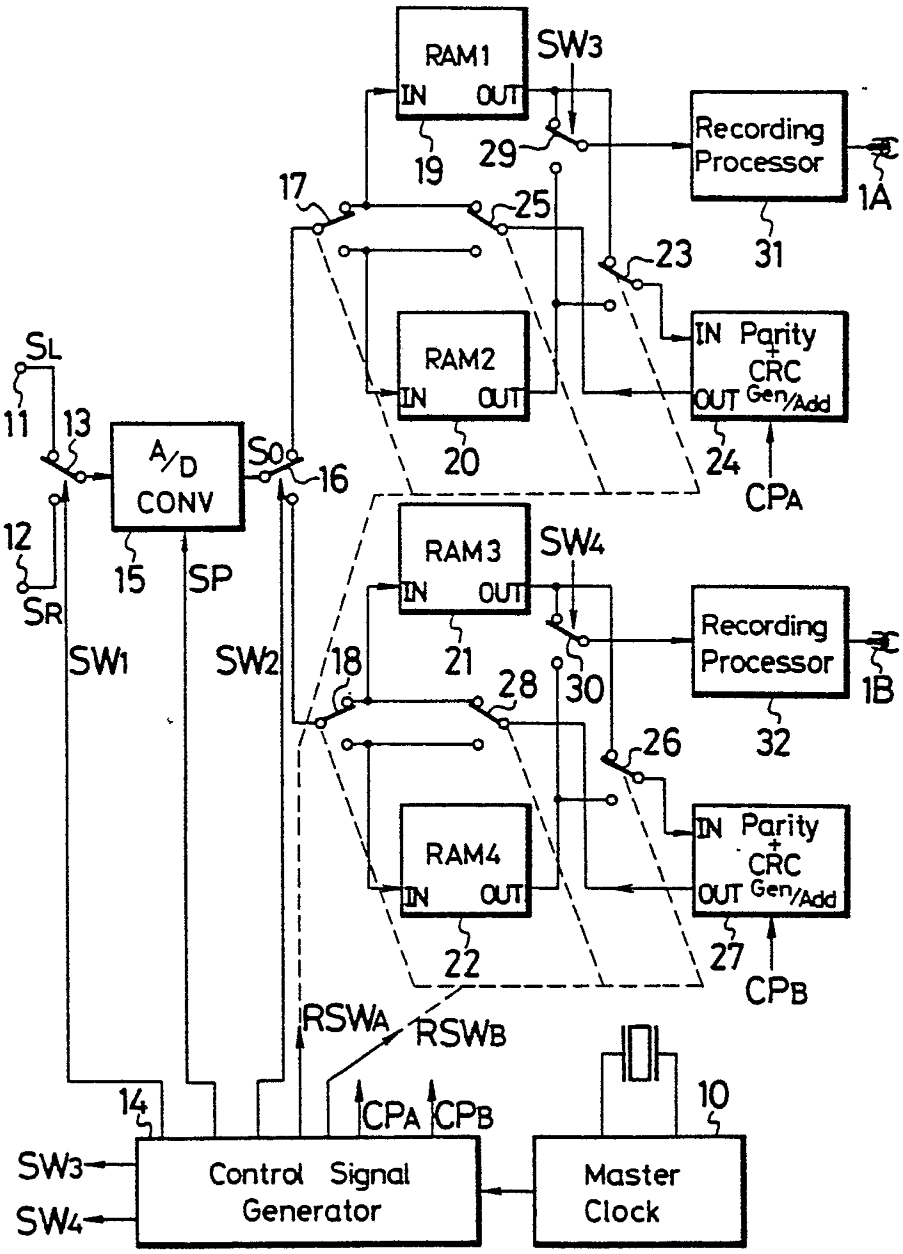
RAM1
IN OUT
SW3
Recording Processor
1A
19
29
31
17
25
23
RAM2
IN OUT
IN Parity + CRC
OUT Gen/Add
SL
11
13
A/D CONV
S0
16
20
24
CPA
12
SR
15
SP
RAM3
IN OUT
SW4
Recording Processor
1B
SW1
SW2
18
21
28
30
32
26
RAM4
IN OUT
IN Parity + CRC
OUT Gen/Add
22
27
CPB
RSWA
RSWB
14
CPA CPB
10
SW3
SW4
Control Signal Generator
Master Clock

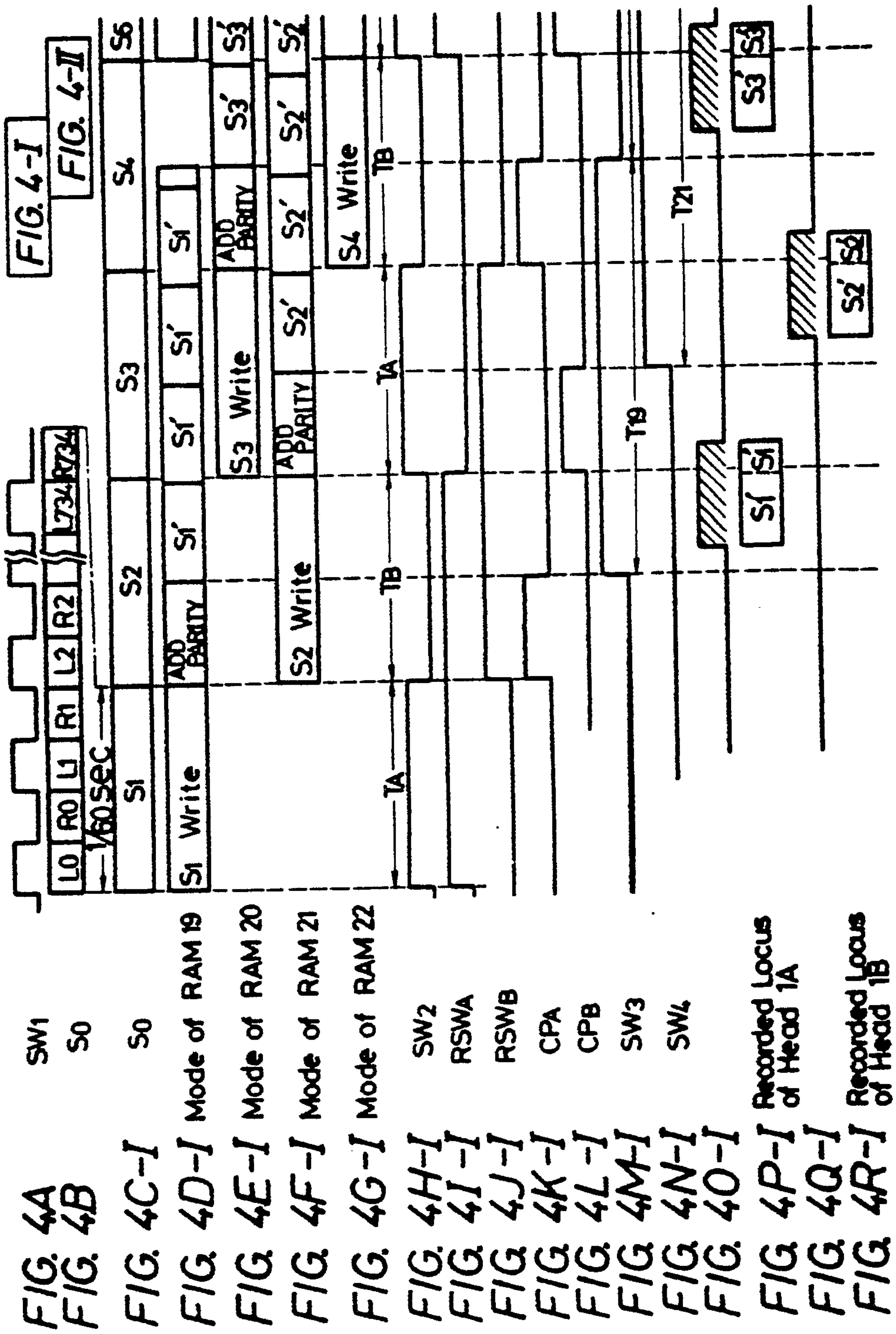
FIG. 4-I
FIG. 4-II
FIG. 4A SW1
FIG. 4B S0
FIG. 4C-I S0
FIG. 4D-I Mode of RAM 19
FIG. 4E-I Mode of RAM 20
FIG. 4F-I Mode of RAM 21
FIG. 4G-I Mode of RAM 22
FIG. 4H-I SW2
FIG. 4I-I RSWA
FIG. 4J-I RSWB
FIG. 4K-I CPA
FIG. 4L-I CPB
FIG. 4M-I SW3
FIG. 4N-I SW4
FIG. 4O-I
FIG. 4P-I Recorded Locus of Head 1A
FIG. 4Q-I
FIG. 4R-I Recorded Locus of Head 1B
L0
R0
L1
R1
L2
R2
L734
R734
1/60 sec
S1
S2
S3
S4
S6
S1 Write
ADD PARITY
S1'
S2 Write
S3 Write
S4 Write
S2'
S3'
TA
TB
T19
T21

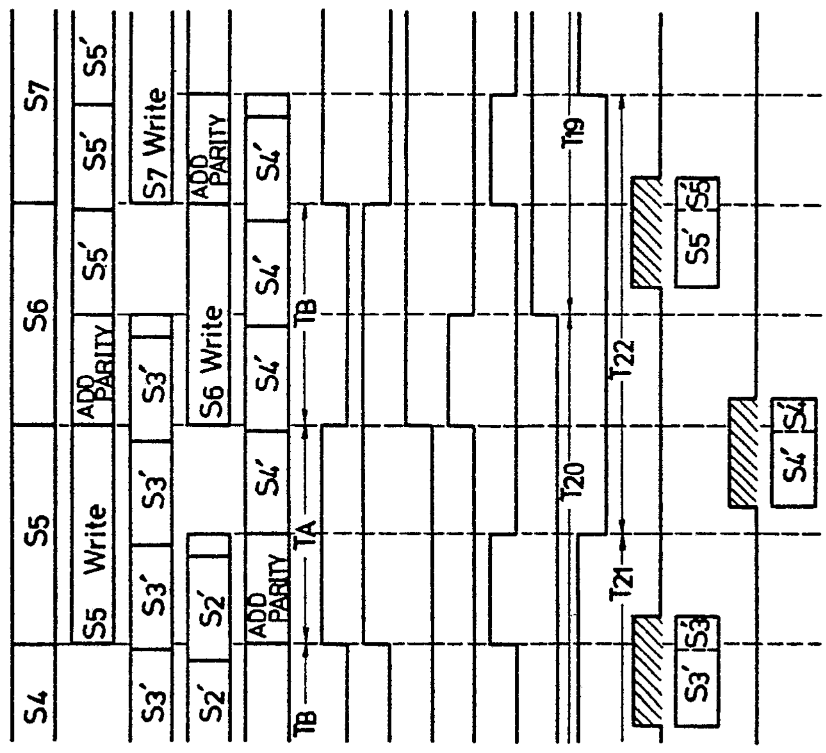


FIG. 4C-II
FIG. 4D-II
FIG. 4E-II
FIG. 4F-II
FIG. 4G-II
FIG. 4H-II
FIG. 4I-II
FIG. 4J-II
FIG. 4K-II
FIG. 4L-II
FIG. 4M-II
FIG. 4N-II
FIG. 4O-II
FIG. 4P-II
FIG. 4Q-II
FIG. 4R-II

F I G. 5

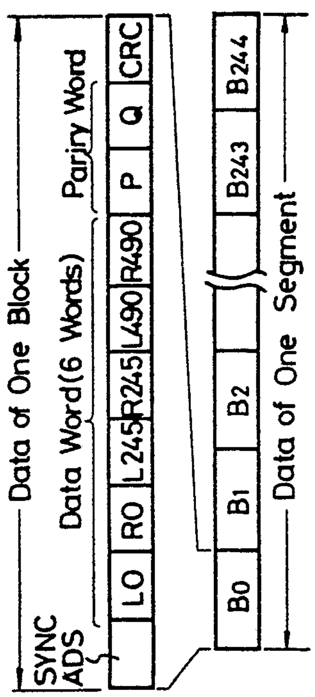
Data of One Block
SYNC
ADS
Data Word(6 Words)
Parity Word
LO
RO
L245
R245
L490
R490
P
Q
CRC
B0
B1
B2
B243
B244
Data of One Segment

F I G. 6

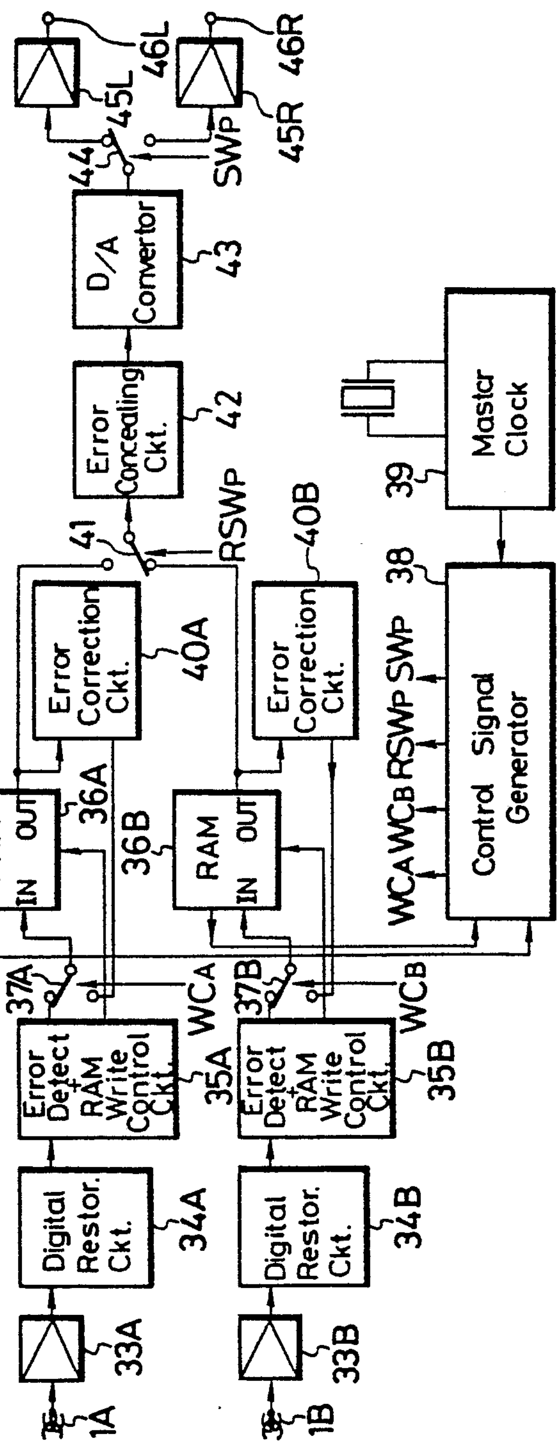
1A
1B
33A
33B
Digital Restor. Ckt.
34A
34B
Error Detect + RAM Write Control Ckt.
35A
35B
37A
37B
WCA
WCB
RAM
IN
OUT
36A
36B
Error Correction Ckt.
40A
40B
41
RSWP
Error Concealing Ckt.
42
D/A Convertor
43
44
SWP
45L
45R
46L
46R
Master Clock
39
Control Signal Generator
38
WCA WCB RSWP SWP

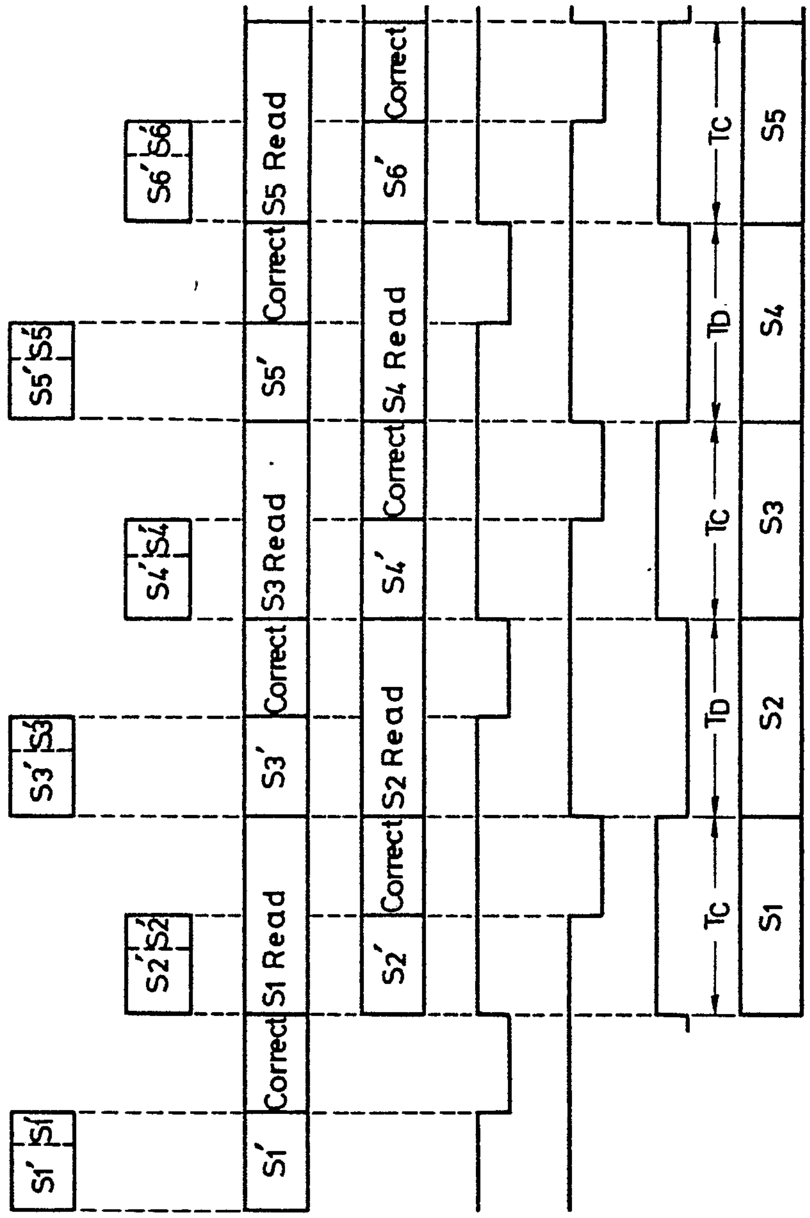


FIG. 7A Output Reproduced by Head 1A
FIG. 7B Output Reproduced by Head 1B
FIG. 7C Mode of RAM 36A
FIG. 7D Mode of RAM 36B
FIG. 7E WCA
FIG. 7F WCB
FIG. 7G RSWP
FIG. 7H